## Europäisches Patentamt

## European Patent Office

## Office européen des brevets

(11) Veröffentlichungsnummer: **0 252 062**
B1

(12) # EUROPÄISCHE PATENTSCHRIFT

(45) Veröffentlichungstag der Patentschrift:
05.09.90

(51) Int. Cl.⁵: **B65D 47/20,** B67D 3/00,
G01F 11/36

(21) Anmeldenummer: **87890118.0**

(22) Anmeldetag: **22.05.87**

(54) Flüssigkeitsportionierer zum Ausschenken von Getränken.

(30) Priorität: **23.05.86 AT 1377/86**

(43) Veröffentlichungstag der Anmeldung:
**07.01.88 Patentblatt 88/1**

(45) Bekanntmachung des Hinweises auf die Patenterteilung:
**05.09.90 Patentblatt 90/36**

(84) Benannte Vertragsstaaten:
**AT BE CH DE ES FR GB GR IT LI LU NL**

(56) Entgegenhaltungen:
**AT-B- 293 911**
**US-A- 2 044 945**
**US-A- 3 164 300**
**US-A- 4 210 263**

(73) Patentinhaber: **Girlinger & Co. Gesellschaft m.b.H.,
A-4132 Lembach Nr. 170(AT)**

(72) Erfinder: **Girlinger, Hans, Pfarrgasse 8,
A-4132 Lembach(AT)**

(74) Vertreter: **Hübscher, Heiner, Dipl.-Ing. et al,
Patentanwälte Dipl.-Ing. Gerhard Hübscher, Dipl.-Ing.
Helmut Hübscher Dipl.-Ing. Heiner Hübscher
Spittelwiese 7, A-4020 Linz(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Flüssigkeitsportionierer zum Ausschenken von Getränken gemäß dem einleitenden Teil des Patentanspruches 1.

Ein Flüssigkeitsportionierer ist aus der US-A-3 164 300 bekanntgeworden. Bei diesem Portionierer ist ein mit der Aufsteckhülse auf die Flasche aufsetzbares Gehäuse vorgesehen, in dem das Meßgefäß mit Hilfe eines mit dem Daumen betätigbaren Hebels und eines Getriebes aus einer durch eine Feder bestimmten Grundstellung in eine Ausgabestellung verdrehbar ist, wobei in der einen Stellung ein Einlaß des Meßgefäßes mit dem Innenraum der Aufsteckhülse und in der anderen Stellung ein Auslaß des Meßgefäßes mit einem Ausgießerauslaß verbunden wird. Es sind noch gesondert sperrbare Luftleiteinrichtungen vorhanden. Der bekannte Portionierer besitzt einen aufwendigen Aufbau, ragt in der aufgesetzten Stellung weit über den Flaschenhals vor, was zu Schwierigkeiten beim Abstellen der Flasche in Regalen führt und ist in der Handhabung umständlich, da es notwendig wird, Flasche und Portionierer so festzuhalten, daß der Daumen für die Betätigung des Hebels freibleibt. Es kann zu Verschmutzungen des Getriebes und eines in das Gehäuse integrierten Zählwerkes durch Undichtheiten an den Ein- und Auslässen kommen, wobei von diesen Stellen Getränk ins Innere des Gehäuses austreten kann. Der Querschnitt der Ein- und Auslaßöffnungen und der Zu- und Ableitungen ist klein im Verhältnis zum lichten Durchmesser des Flaschenhalses, wo durch sich lange Füllzeiten ergeben.

Diese grundsätzlichen Nachteile sind auch bei anderen bekannten mit der Flasche handhabbaren Flüssigkeitsportionierern gegeben. Aus der US-A-2 044 945 ist ein Portionierer bekannt, bei dem ein über einen Pfropfen koaxial an eine Flasche anschließbares Meßgefäß einen durch den hohlen Pfropfen führenden Einlaß und diesem gegenüber einen Auslaß aufweist, wobei Ein- und Auslaß wechselweise über Absperrorgane auf einer Schubstange geschlossen und geöffnet werden können, welche Schubstange innerhalb des Meßgefäßes geführt und mit einem seitlich abgedichtet herausgeführten Betätigungsarm verbunden ist, an dem eine Feder angreift, die die Schubstange in die eine Absperrstellung zieht. An diesem Arm sitzt ein mit dem Daumen der die Flasche festhaltenden Hand zu betätigender Knopf. Es ergeben sich beträchtliche Abdichtprobleme und die Handhabung ist wieder umständlich.

Nach der US-A-3 141 585 und der DE-A-1 955 861 ist wieder ein über eine Schubstange betätigbares Doppelabsperrorgan für einen Ein- und einen Auslaß eines Meßgefäßes vorhanden, wobei die Schubstange über den Einlaß hinaus verlängert, abgedichtet aus dem Portionierergehäuse herausgeführt und mit einem Betätigungsknopf für den Daumen versehen ist. Die Flasche wird an einem quer oder schräg zur Achse des Meßgefäßes herausgeführten Ansatzteil angeschlossen. Zwischen Flasche und Einlaß des Meßgefäßes ergeben sich lange Leitungswege und die Handhabung des Portionierers sowie insbesondere die Betätigung der Absperrorgane sind umständlich.

Aus der GB-A-992 A.D. 1898 ist ein Portionierer bekannt, bei dem in einem über einen Pfropfen an eine Flasche ansetzbaren Meßgefäß ein Rohr gegen eine Feder abgedichtet verstellbar ist, das seitliche Ein- und Auslaßöffnungen aufweist, die mit Ansatzrohren des Meßgefäßes zusammenwirkend einmal mit einer einlaßseitigen Einlaßöffnung des in die Flasche tauchenden Außenrohres verbindbar sind, wobei die Auslaßöffnung des verschiebbaren Rohres vom zugeordneten Außenrohr abgeschlossen ist, wobei in der anderen Stellung die Einlaßöffnung abgeschlossen und die Auslaßöffnung des verschiebbaren Rohres freigegeben wird. Das Auslaßrohr ist verlängert und trägt einen Anschlag für den Rand eines Glases, so daß es durch Niederdrücken der Flasche auf diesen Anschlag zu im Ausgabesinn betätigt werden kann. Dabei ist es allerdings notwendig, das Glas festzuhalten, um ein Kippen zu verhindern.

Aus den AT-A-293 911 (entspricht dem Oberbegriff des Anspruchs 1) und 342 449 sind ortsfest an Traggestellen od. dgl. gemeinsam mit der Flasche befestigbare Portionierer bekannt, bei denen die Absperrorgane auf einem gemeinsamen, aus dem ablaufseitigen Ende des Meßgefäßes herausgeführten Stößel angeordnet sind, der selbst ein Auslaßrohr bildet und durch Andrücken des Glases an einen Anschlag gegen die Rückholfeder verstellt werden kann. Diese Portionierer besitzen einen einfachen, funktionstüchtigen Aufbau und eine geringe Bauhöhe zwischen Flasche und Auslaß, sind aber, wie erwähnt, bisher nur in ortsfester Anordnung im Einsatz.

Aufgabe der Erfindung ist es, einen Flüssigkeitsportionierer zu schaffen, der leicht gemeinsam mit der an ihm angebrachten Flasche zu handhaben ist, weitgehend störungsfrei und wartungsfrei betrieben, leicht gereinigt werden kann, in der Montagestellung einen nur geringen Überstand über das Ende des Flaschenhalses aufweist und mit dessen Hilfe eine rasche Folge von Ausschenkvorgängen vornehmbar ist. Eine Teilaufgabe der Erfindung besteht ferner in der Schaffung eines Flüssigkeitsportionierers mit Zählwerk, bei dem das Zählwerk vor Verschmutzung geschützt ist und gut abgelesen werden kann, wobei nach einer weiteren Teilaufgabe gewährleistet werden sol, daß eine Getränkeentnahme ohne Zähl werksbetätigung verhindert wird. Schließlich soll nach einer weiteren Teilaufgabe die Möglichkeit geschaffen werden, den Flüssigkeitsportionierer auch an mit einem bleibend angebrachten Ausgießerverschluß versehenen Flaschen ohne Abnahme dieses Ausgießerverschlusses zu verwenden.

Die Hauptaufgabe der Erfindung wird durch die kennzeichnenden Merkmale des Patentanspruches 1 gelöst. Es wird möglich, einen funktionstüchtigen Portionierer mit rascher Füll- und Entleerzeit, etwa gemäß den beiden genannten AT-PSen zu verwenden, wobei durch die besondere Ausbildung der Handhabe und den Anschluß der Flasche über Aufsteckhülse und Rohrknie eine pistolenartige Betätigung des Ausgießers in einer weitgehend natürlichen Handhaltung ermöglicht wird, in der der Zeigefinger für die Betätigung des Abzugsbügels frei ist, der Daumen und die übrigen Finger der Hand aber Flasche und Portionierer einwandfrei festhalten können. Es wird dadurch auch ein "Zielen" auf das jeweilige zur Aufnahme des Getränkes bestimmte Trinkgefäß erleichtert, ohne daß dieses Gefäß berührt oder festgehalten werden muß. Durch die zusätzliche Führung bleibt die Funktionstüchtigkeit trotz des außermittigen einseitigen Angriffes des Abzugsbügels gewährleistet, wobei diese Führung durch die Ausbildung nach Anspruch 2 noch verbessert werden kann.

Eine bevorzugte Ausgestaltung der Führung entnimmt man dem Anspruch 3.

Durch die Ausbildung nach Anspruch 4 wird erreicht, daß allfällige, am Auslaß des Meßgefäßes neben dem Auslaßrohr austretende Flüssigkeitsreste mit dem Getränk abgegeben werden und sich nicht oben auf dem Teller sammeln und seitlich abtropfen.

Die Ausführung nach Anspruch 5 ermöglicht es, den Abzugsbügel in die für den jeweiligen Benützer günstigste Griffstellung zum Zeigefinger der den pistolengriffartigen Teil umfassenden Hand zu bringen.

Gemäß Anspruch 6 ist das Zählwerk nicht wie bei bekannten Portionierern in das Portionierergehäuse eingebaut, sondern gut ablesbar angebracht. Es können überdies lediglich durch Änderung des Halterungsbauteiles sonst gleiche Portionierer mit und ohne Zählwerk gebaut werden. Bei der drehbaren Anordnung des Abzugsbügels um die Längsachse des Meßgefäßes wird das Zählwerk mitgedreht und behindert daher nicht die Portioniererbetätigung.

Durch die Ausführung nach Anspruch 7 wird eine Getränkeentnahme ohne Zählerbetätigung verhindert. Der Lösung der gleichen Teilaufgabe dient die Ausbildung nach Anspruch 8.

Die Ausführungen nach den Ansprüchen 9 bis 11 ermöglichen die Verwendung des Portionierers auch bei mit sogenannten Sicherheitsausgießern ausgestatteten Flaschen, ohne daß dazu der Sicherheitsausgießer von der Flasche abgenommen werden muß. Die Grundidee der Konstruktion nach den Ansprüchen 9 bis 11 besteht darin, daß bei solchen Ausgießern, die meist auch als Nachfüllsperre ausgebildet sind, und die an ihrem freien Ende eine Verschlußplatte aufweisen, unter der kleine radial ausgerichtete Ausströmkanäle verlaufen, sich an den Öffnungen der Ausströmkanäle durch Tropfenbildung Sperren ausbilden können, die ein freies Nachströmen verhindern. Diese Sperrwirkung beruht auf einem Gleichgewichtszustand und einer Behinderung des Nachströmens von Luft in die Flasche. Durch die Konstruktionen nach den Ansprüchen 9 bis 11 wird nun das Auftreten eines solchen Gleichgewichtszustandes verhindert und es bleibt das freie Nachströmen der Flüssigkeit in das Meßgefäß nach jeder Getränkeabgabe gewährleistet.

Weitere Einzelheiten und Vorteile des Erfindungsgegenstandes entnimmt man der Zeichnungsbeschreibung.

In der Zeichnung ist der Erfindungsgegenstand beispielsweise veranschaulicht. Es zeigt

Fig. 1 einen Portionierer in der Gebrauchsstellung in Seitenansicht, wobei das Ende eines Flaschenhalses angedeutet wurde,

Fig. 2 als Detail den Abzugbügel und den zugeordneten Teller im Teilschnitt,

Fig. 3 einen Schnitt durch Aufsteckhülse, Rohrknie und oberes Meßgefäßende,

Fig. 4 eine Ausführungsvariante zu Fig. 3 mit einer in der Aufsteckhülse angebrachten Luftleiteinrichtung,

Fig. 5 die Luftleiteinrichtung in Ansicht,

Fig. 6 in einer der Fig. 1 entsprechenden Darstellungsweise einen mit einem Zählwerk ausgestatteten Portionierer in Seitenansicht,

Fig. 7 den Unterteil des Portionierers nach Fig. 6 vom Abzugbügel her gesehen,

Fig. 8 eine Unteransicht zu Fig. 7 und die

Fig. 9 und 10 das Zusammenwirken der mit dem Abzugbügel verbundenen Führungshülse mit einem Betätigungsarm des Zählwerkes in zwei um 90° verdrehten Ansichten, wobei alle übrigen Teile der besseren Übersichtlichkeit halber weggelassen wurden.

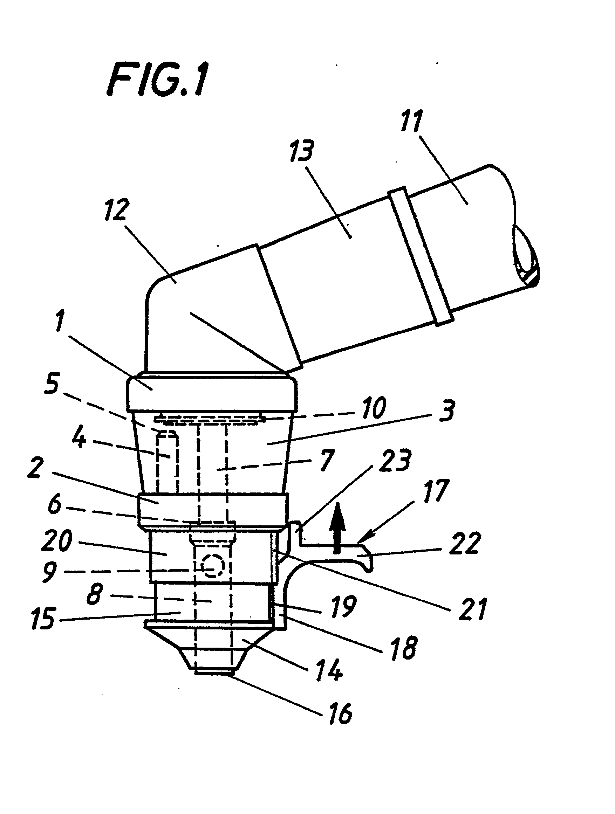

Der Portionierer besitzt jeweils ein zwischen einem oberen Gehäuseteil 1 und einem unteren Gehäuseteil 2 angeordnetes, die Form eines konischen Rohres aufweisendes Meßgefäß 3, wobei der Gehäuseteil 2 unten auf das Meßgefäß 3 aufgeschraubt ist und einen nach unten konisch abfallenden Bodenteil enthält, von dem ein nach unten offenes Belüftungsrohr 4 ins Innere des Meßgefäßes reicht, das nach oben hin durch ein Ventil 5 abgeschlossen ist, das in noch zu beschreibender Weise bei Betätigung des Portionierers im Ablaßsinn geöffnet wird und damit den Luftzutritt ins Innere des Meßgefäßes 3 freigibt. Der Bodenteil fällt zu einer Austrittsöffnung ab, mit der ein Ventilkolben 6 auf einem Stößel 7 zusammenwirkt, wobei der Stößel 7 nach unten durch ein Rohr 8 mit seitlicher Einlaßöffnung 9 verlängert ist. Am oberen Ende trägt der Stößel 7 ein Ventil 10, das mit einer im Teil 1 vorgesehenen Einlaßöffnung zusammenwirkt. In der in Fig. 1 dargestellten Lage hat das Ventil 10 die Einlaßöffnung des Meßgefäßes 3 geöffnet, wogegen die Öffnung 9 geschlossen ist, so daß sich das Meßgefäß 3 mit Flüssigkeit aus einer Flasche 11 füllen kann. Die Flasche schließt über ein Rohrknie 12 und eine Aufsteckhülse 13 aus gummielastischem Material an den Portionierer an. Am unteren Ende des vom Rohr 8 gebildeten Teiles des Stößels 7, 8 sitzt ein Teller 14, von dem eine Führungshülse 15 hochragt. Zwischen dem Teller 14 und dem im Teil 2 angebrachten Bodenteil ist eine Rückholfeder vorgesehen. Der Teller 14 wirkt mit einem Betätigungstößel für das Ventil 5 zusammen. Wird der Teller 14 mit dem Stößel 7, 8 hochgedrückt, dann schließt das Ventil 10 und das Ventil 6 gibt den unteren Auslaß des Meßgefäßes frei, durch den die Einlaßöffnung 9 eintritt, so daß die bis dahin im Meßgefäß 3 enthaltene Flüssigkeit an dem aus dem Teller 14 vorragenden Rohrende 16 austreten kann. Mit Ausnahme der Teile 12 und 13 ist der Portionierer in der bisher beschriebenen Art aus den AT-PS 293 911 und 342 449 in ortsfester Anordnung mit am Teller 14 vorgesehenen Anschlägen zum Andrücken eines Glases bekannt.

Am Teller 14 ist seitlich ein Abzugbügel 17 angebracht, der einen parallel zum Mantel der Hülse 15 verlaufenden Längsteil 18 aufweist, wobei zwischen diesem Längsteil 18 und der Hülse 15 ein Spalt 19 für den Eintritt einer äußeren Führungshülse 20 vorgesehen ist, die gemeinsam mit dem erwähnten Bodenteil nach Lockern der Schraubverbindung zwischen den Teilen 2 und 3 um die Längsachse des Meßgefäßes 3 verdreht werden kann und die außenseitig eine Führungsnut oder Führungsrippen 21 für den Längsteil 18 trägt. Der Längsteil 18 geht in einen Abzugbügl 22 über, von dem wieder eine Stütze 23 vorsteht, die am Teil 2 geführt ist.

Der Portionierer wird für den Ausschenkvorgang an den Teilen 12, 13 und teilweise auch am Ende des Flaschenhalses wie eine Pistole erfaßt, wobei der Portioniervorgang durch Betätigung des Abzugbügels 22 mittels des Zeigefingers vorgenommen werden kann. Durch Verdrehen und Feststellen des Abzugbügels mit dem Teller 14 und den übrigen gemeinsam damit verdrehbaren Teilen kann die für den Benützer günstigste Gebrauchslage des Abzugbügels 17 zum Pistolengriff 12, 13 eingestellt werden.

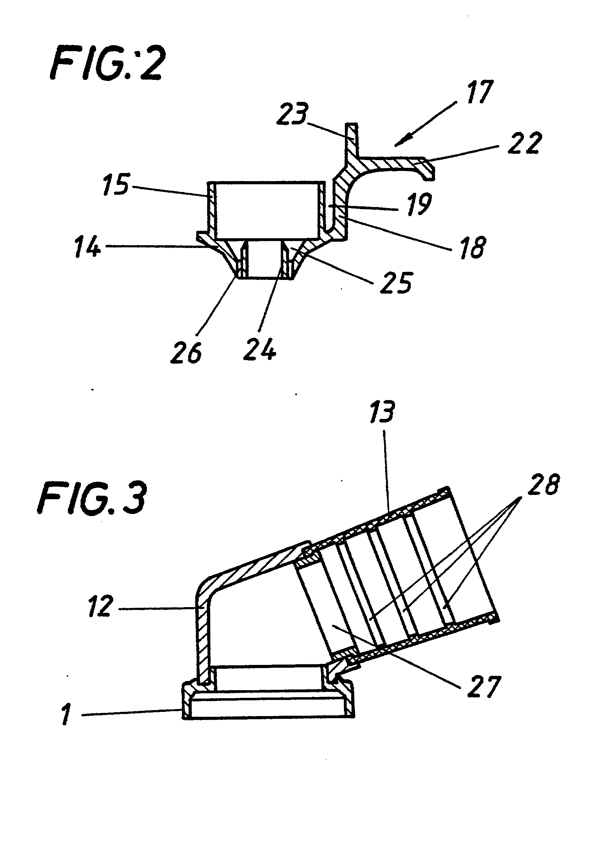

Fig. 2 zeigt, daß der Teller 14, dessen Rand einen Anschlag für den unteren Rand eines Teiles 20 bildet, eine innere Halterungshülse 24 für das Rohr 8 besitzt, wobei der Tellerboden 25 um diese Halterungshülse 24 zu Ableitöffnungen 26 für allenfalls außen entlang des Rohres 8 abtropfende Flüssigkeit abfällt.

Fig. 3 zeigt, wie die Aufsteckhülse mit Hilfe eines Klemmringes 27 im Ende des Rohrknies 12 gehalten ist. Die Aufsteckhülse 13 besitzt innen abstandsweise angeordnete Ringrippen 28, die sich an den Flaschenhals bzw. einen an der Flasche vorgesehenen Verschlußkopf anlegen.

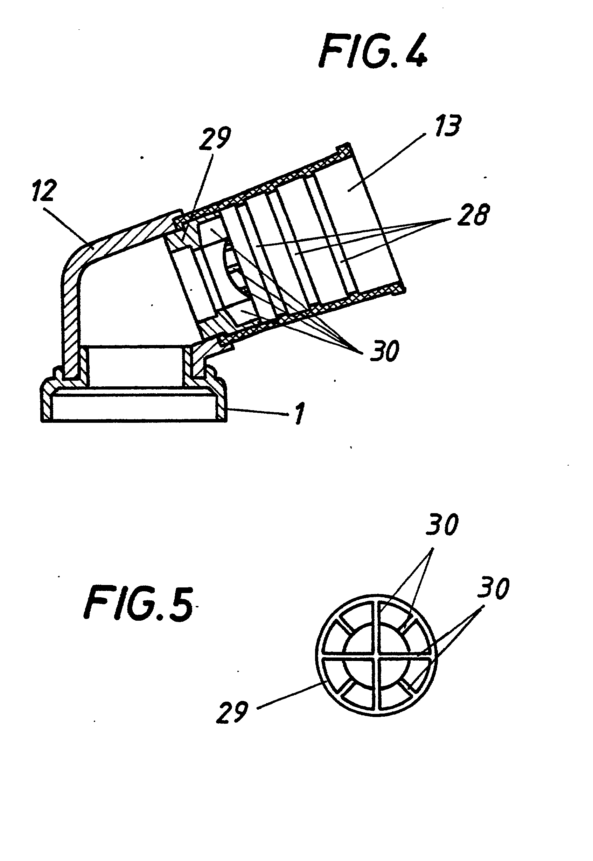

Bei der Ausführungsvariante nach den Fig. 4 und 5 ist in das Rohrknie 12 zur Befestigung der Aufsteckhülse 13 an Stelle des Klemmringes 27 nach Fig. 3 ein Einsatzteil 29 eingesetzt, der als Leitschaufelring mit mehreren Leitschaufeln 30 ausgebildet ist, um die Flüssigkeits- und Luftströmung zwischen Flasche und Meßgefäß in mehrere Teilströme zu unterteilen. Eine entsprechende Ausführung wird vorgesehen, um bei Verwendung einer Flasche mit bleibend angebrachtem Sicherheitsausgießer ein sicheres Nachströmen der Flüssigkeit aus der Flasche zu gewährleisten. Es wäre auch möglich, an Stelle der achsparallel angeordneten Leitschaufeln 30 innerhalb eines Außenringes eine Kleinturbine mit gegenüber der Längsachse geneigten Schaufeln drehbar zu lagern, die durch jede Luft- bzw. Flüssigkeitsströmung in Drehung versetzt wird und ebenfalls das Ausbilden störender Tropfensperren an den Öffnungen des Sicherheitsausgießers verhindert. In der Aufsteckhülse 13 ist hier genügend Freiraum für die seitlichen Auslaßöffnungen des Sicherheitsausgießers vorzusehen.

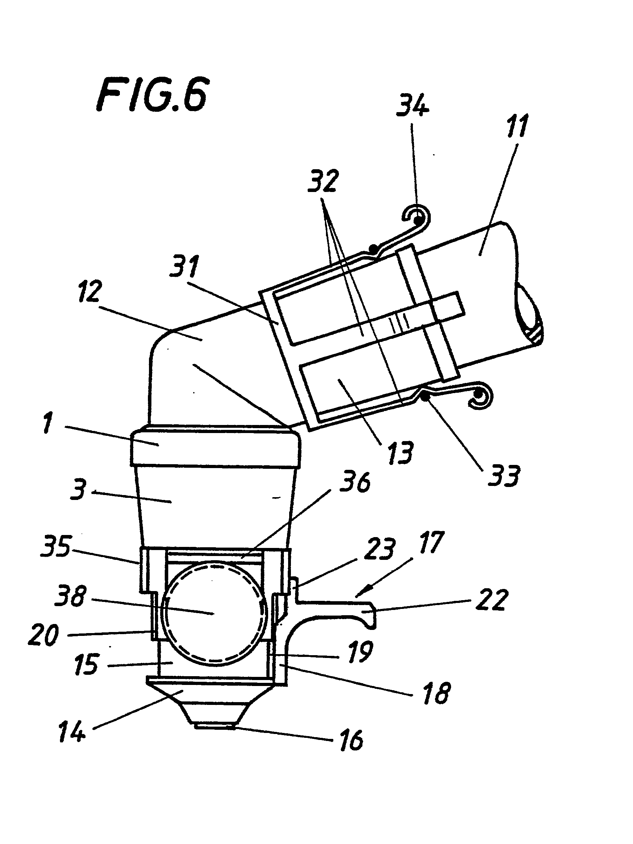

Nach den Fig. 6 bis 10 ist ein Portionierer vorgesehen, der in seinem grundsätzlichen Aufbau dem Portionierer nach den vorherigen Figuren entspricht, weshalb für gleiche Teile gleiche Bezugszeichen verwendet wurden. Zur Sicherung der Flasche 11 in der Aufsteckhülse 13 dient ein korbartiger Halterungsteil, der mit einem Aufsetzring 31 an das Rohrknie 12 anschließt und mehrere Schenkel 32 trägt, die durch zwei Spannbänder 33, 34 um die Hülse 13 bzw. um den Flaschenhals festspannbar sind, wobei die Spannbänder 33, 34 plombiert oder versiegelt werden können, um eine unbefugte Abnahme des Portionierers von der Flasche zu verhindern. Der Teller 14 und die mit ihm verbundenen Teile sind wieder um die Längsachse des Meßgefäßes 3 verdrehbar. Außen ist auf dem Teil 2 eine Klemmhülse 35 aufgesetzt, die mit Hilfe einer Schraube 36 festgespannt und gelockert werden kann. Diese Klemmhülse weist eine Führungsnut 37 für den entsprechend ausgebildeten Fortsatz 23 des Abzugsbügels 22 auf. Ferner besitzt die Klemmhülse 35 eine Einschiebeführung für das Gehäuse 38 eines Zählwerkes, wobei dieses Zählwerk durch die den Spalt der Klemmhülse überbrückende Schraube 36 in der Arbeitsstellung gesichert bzw. durch Anziehen der Schraube festgeklemmt wird. Beim Ausführungsbeispiel ist das Zählwerk 38 gegenüber dem Abzugsbügel 17 um 90° versetzt angeordnet. Es kann mit der Hülse 35 und dem Abzugsbügel 17 nach Lockern der Schrauben 36 um die Längsache des Meßgefäßes 3 verdreht und dann wieder durch Anziehen der Schraube 36 festgeklemmt werden. Es ist möglich, die Schraube 36 in der Klemmstellung durch Plomben oder ein Lacksiegel gegen unbefugte Betätigung zu sichern.

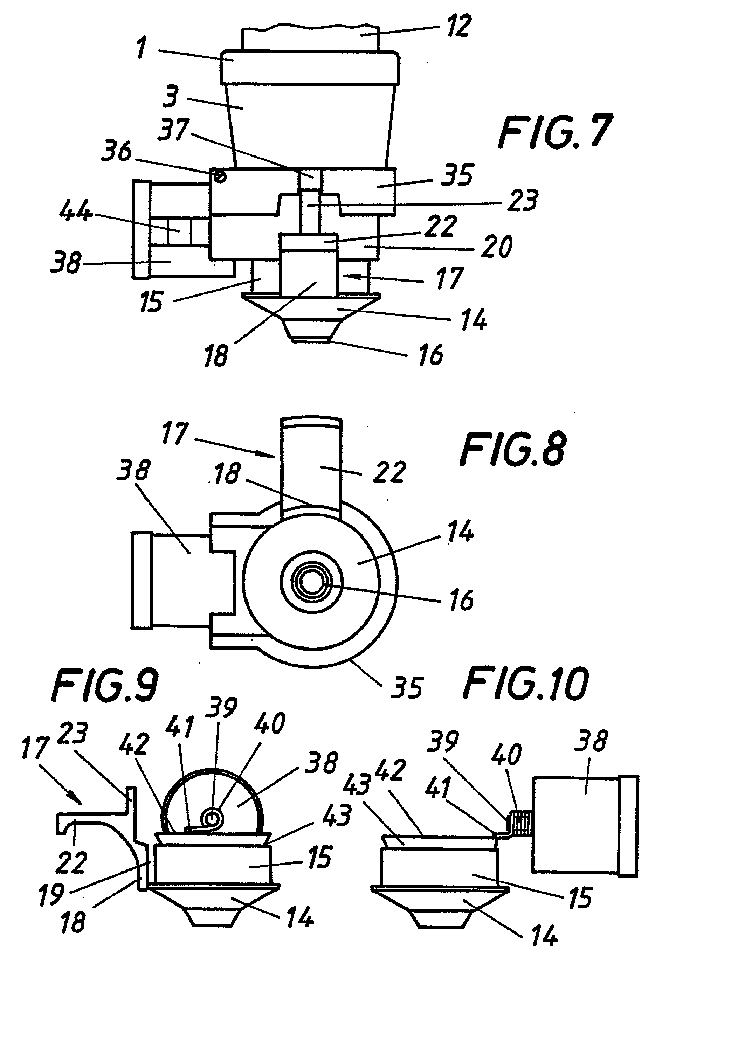

Bei dem Zählwerk 38 handelt es sich um ein mechanisches Zählwerk, das durch Verdrehen seiner Welle 39 weitergeschaltet wird. Für die Betätigung des Zählwerkes ist eine um die Welle 39 gewickelte Drehfeder 40 vorgesehen, deren Endschenkel 41 in der Ruhestellung mit dem oberen Rand 42 der Hülse 15 in Eingriff steht. Der Schalthub des Zählwerkes 38 beträgt nur einen Bruchteil des möglichen Hubes des Portionierers und damit der Hülse 15. Wenn die Hülse 15 bei der normalen Betätigung in die in den Fig. 9 und 10 dargestellte Lage, die einer Zwischenstellung des Portionierers entspricht, angehoben wurde, wurde die Feder 40 vorgespannt und hat das Zählwerk 38 betätigt. Durch die Vorspannung verkürzt sich die Länge der Feder in ihrer Axialrichtung. Ferner wandert das Ende 41 der Feder 40 nach einer Kreissehne am Rand 42 nach außen, bis dieses Ende schließlich bei weiterer Betätigung des Portionierers vom Rand abspringt, sich die Feder 40 teilweise entspannt und zurückdreht, so daß das Federende 41 mit einer Kerbe 43 in Eingriff kommt, die den aus dem Ende der Feder 41 gebildeten Betätigungsarm weiter mitnimmt. Es können noch weitere Kerben unterhalb der Kerbe 43 vorgesehen sein. Die Anordnung ist so gewählt, daß der Sprung des Armes 41 von der Fläche 42 in die Kerbe 43 nicht ausreicht, um das Zählwerk für einen weiteren Zählschritt bereitzustellen. Es wird also bei einem ordnungsgemäßen Ausschenkvorgang nur eine Verstellung des Zählwerkes um einen Zählschritt stattfinden, wobei dieser Zählschritt in einem Anzeigefenster 44 des Zählers 38 angezeigt wird. Wird dagegen der Portionierer aus der Entleerstellung nur zum Teil zurückgestellt, etwa um durch geringes Öffnen des Ventiles 10 ein Nachströmen der Flüssigkeit in den Meßbehälter zu erzielen und dann der Abzugsbügel 22 neuerlich im Sinne einer Entleerung des Meßgefäßes betätigt, so reicht dieser Teilhub aus, um das Zählwerk 38 zu betätigen.

**Patentansprüche**

1. Flüssigkeitsportionierer zum Ausschenken von Getränken, der mit einer Aufsteckhülse (13) am Hals (11) einer für den Ausschenkvorgang mit ihm gemeinsam handhabbaren Flasche befestigbar ist und ein Meßgefäß (3) aufweist, das über von einer mit einer Führungshülse (15) versehenen Handhabe (17) gemeinsam betätigbare, durch eine Feder in der einen Sperrstellung gehaltene Absperrorgane (6, 9, 10) die auf einem gemeinsamen, aus dem ablaufseitigen Ende des Meßgefäßes (3) herausgeführten Stößel (7, 8) angeordnet sind, der selbst ein Auslaßrohr (8) bildet, wechselweise mit einem an die Aufsteckhülse (13) anschließenden Einlaß und einem Auslaß am anderen Ende verbindbar ist und für das eine Belüftungseinrichtung (4, 5) vorgesehen ist, dadurch gekennzeichnet, daß die Absperrorgane (6, 9, 10) an einer in Verlängerung des Meßgefäßes (3) vorgesehenen Führung (20) mit der Führungshülse (15) zusätzlich geführt und mit einer nach Art eines Abzugsbügels (22) ausgebildeten äußeren Handhabe verbunden ist, wobei die Aufsteckhülse (13) mit dem oberen Einlaß des Meßgefäßes (3) in einem stumpfen Winkel über ein Rohrknie (12) verbunden ist, so daß der Abzugsbügel (22) mit dem Zeigefinger der den Portionierer an dem aus Aufsteckhülse (13) und Rohrknie (12) gebildeten pistolengriffartigen Teil festhaltenden Hand betätigbar ist.

2. Flüssigkeitsportionierer nach Anspruch 1, dadurch gekennzeichnet, daß die in Verlängerung des Meßgefäßes (3) vorgesehene Führung (20; 35) wenigstens eine Längsführung (21; 37) für ein mit dem Abzugsbügel verbundenes Gleitstück (23) aufweist.

3. Flüssigkeitsportionierer nach Anspruch 1 oder 2, dadurch gekennzeichnet, daß die das Meßgefäß (3) verlängernde Führung selbst eine Hülse (20) bildet, in der die mit dem Stößel (7, 8) verbundene Führungshülse (15) geführt ist, wobei der mit einem am auslaßseitigen Ende der Führungshülse (15) angebrachten, eine Durchführung für den Stößel (8) aufweisenden Teller (14) verbundene Abzugsbügel (17) mit einem Längsteil (23) die das Meßgefäß (3) verlängernde Führung (20; 35) außen übergreift.

4. Flüssigkeitsportionierer nach Anspruch 3, dadurch gekennzeichnet, daß der Teller (14) zur Durchführung (24) des den Auslaß bildenden Stößels (8) hin muldenförmig vertieft ist und neben dem Auslaß (16) mit Durchtrittsöffnungen (26) versehen ist.

5. Flüssigkeitsportionierer nach einem der Ansprüche 1 bis 4, dadurch gekennzeichnet, daß die das Meßgefäß (3) verlängernde Führung (20; 35) mit dem Stößel (7, 8) und dem Abzugsbügel (17) um die Längsachse des Meßgefäßes (3) drehbar und in verschiedenen Drehstellungen feststellbar angebracht ist.

6. Flüssigkeitsportionierer nach einem der Ansprüche 1 bis 5, dadurch gekennzeichnet, daß ein jede Portioniererbetätigung anzeigendes Zählwerk mit seinem Gehäuse (38) an der mit dem Meßgefäß (3) verbundenen Führung (35) radial vorstehend und mit Winkelabstand vom Verstellbereich des Abzugsbügels (17) angeordnet ist.

7. Flüssigkeitsportionierer nach Anspruch 6, dadurch gekennzeichnet, daß die Führungshülse (15) in ihrem Mantel in Längsrichtung aufeinanderfolgend Anschlagkerben (42, 43) für einen als Drehfederarm (41) ausgebildeten Betätigungsarm des Zählwerkes (38) aufweist und ein Zählwerk vorgesehen ist, bei dem der für die Betätigung erforderliche Hub nur einem Bruchteil des vollen Betätigungshubes des Portionierers entspricht, so daß bei der Ausübung eines vollen Portioniererhubes nur eine Zählung stattfindet, wobei der Betätigungsarm (41) von Anschlagkerbe (42) zu Anschlagkerbe (43) weiterspringt, aber auch bei einem Betätigungshub nach nur teilweiser Rückstellung des Portioniererstößels (7, 8) über den dann mit einer der Kerben (43) in Eingriff stehenden Betätigungsarm (41) eine Zählerbetätigung möglich ist.

8. Flüssigkeitsportionierer nach einem der Ansprüche 1 bis 7, dadurch gekennzeichnet, daß die Aufsteckhülse (13) über eine plombier- oder versiegelbare Halterung (31 bis 34) bleibend am Flaschenhals (11) befestigbar ist.

9. Flüssigkeitsportionierer nach einem der Ansprüche 1 bis 8, dadurch gekennzeichnet, daß im Durchlaufweg zwischen dem Aufnahmebereich (13) für das Flaschenhalsende und dem Einlaß des Meßgefäßes (3) Leitvorrichtungen (29, 30) vorgesehen sind, die die Luft- bzw. Flüssigkeitsströmung in ihrem Bereich in mehrere Teilströme unterteilen.

10. Flüssigkeitsportionierer nach Anspruch 9, dadurch gekennzeichnet, daß die Leitvorrichtung aus einem einen größeren Durchmesser als das Ende des Flaschenhalses bzw. eines an diesem bleibend befestigten Ausgießers aufweisenden, insbesondere einen Anschlag für dieses Ende bildenden Leitschaufelring (29, 30) besteht.

11. Flüssigkeitsportionierer nach Anspruch 9, dadurch gekennzeichnet, daß die Leitvorrichtung aus einer im Strömungsweg drehbar gelagerten, mehrschaufeligen axial durchströmten Kleinturbine besteht.

**Claims**

1. A liquid metering dispenser for the dispensing of beverages, the said dispenser being adapted to be secured by a push-on sleeve (13) to the neck (11) of a bottle which is adapted to be handled jointly therewith for the dispensing operation and comprising a measuring vessel (3) connectable alternately to an inlet adjoining the push-on sleeve (13) and to an outlet at the other end by way of shut-off means (6, 9, 10) which are adapted to be jointly actuated by a handle (17) provided with a guide sleeve (15), said shut-off means (6, 9, 10) being held in one blocking position by a spring and being disposed on a common push-rod (7, 8) which is taken out of the outlet end of the measuring vessel (3) and which itself forms an outlet tube (8), aerating means (4, 5) being provided for said measuring vessel, characterised in that the shut-off means (6, 9, 10) is additionally guided at a guide (20) with the guide sleeve (15), said guide (20) being provided in extension of the measuring vessel (3), and is connected to an outer handle constructed after the style of a trigger guard (22), the push-on sleeve (13) being connected to the top inlet of the measuring vessel (3) at an obtuse angle via a bend (12) so that the trigger guard (22) is adapted to be actuated by the index finger of the holding the metering dispenser at the part in the form of a pistol grip formed by the push-on sleeve (13) and the bend (12).

2. A liquid metering dispenser according to claim 1, characterised in that the guide (20; 35) provided in extension of the measuring vessel (3) comprises at least one longitudinal guide (21; 37) for a sliding member (23) connected to the trigger guard.

3. A liquid metering dispenser according to claim 1 or 2, characterised in that the guide forming the extension of the measuring vessel (3) itself forms a sleeve (20) in which the guide sleeve (15) connected to the push rod (7, 8) is guided, while the trigger guard (17) connected to a plate (14) disposed at the outlet end of the guide sleeve (15) and having a passage for the push-rod (8) engages by a longitudinal member (23) over the outside of the guide (20, 35) forming the extension of the measuring vessel (3).

4. A liquid metering dispenser according to claim 3, characterised in that the plate (14) is recessed in the form of a trough towards the passage (24) for the push-rod (8) forming the outlet and has passage apertures (26) adjacent the outlet (16).

5. A liquid metering dispenser according to any one of claims 1 to 4, characterised in that the guide (20, 35) forming the extension of the measuring vessel (3) is rotatable with the push-rod (7, 8) and the trigger guard (17) about the longitudinal axis of the measuring vessel (3) and is lockable in different rotary positions.

6. A liquid metering dispenser according to any one of claims 1 to 5, characterised in that a counter indicating each actuation of the metering dispenser is disposed with its housing (38) radially projecting at the guide (35) connected to the measuring vessel (3) and at an angular distance from the range of movement of the trigger guard (17).

7. A liquid metering dispenser according to claim 6, characterised in that the guide sleeve (15) has in its outer surface abutment notches (42, 43) disposed consecutively in the longitudinal direction and intended for an actuating arm of the counter (38) in the form of a torsion spring arm (41) and a counter is provided in which the travel required for actuation is equivalent to just a fraction of the complete actuation travel of the metering dispenser so that when a full metering dispenser travel takes place there is only one count, the actuating arm (41) advancing from one abutment notch (42) to another (43) but counter actuation is possible in the case of an actuation travel after just partial resetting of the metering dispenser push rod (7, 8) by way of the actuating arm (41) then engaging one of the notches (43).

8. A liquid metering dispenser according to any one of claims 1 to 7, characterised in that the push-on sleeve (13) is adapted to be secured to the bottleneck (11) permanently by way of a holder (31 to 34) adapted to be lead-sealed or otherwise sealed.

9. A liquid metering dispenser according to any one of claims 1 to 8, characterised in that guide means (29, 30) for dividing the flow of air and liquid into a number of sub-flows in the area of said means are provided in the path between the bottleneck end receiving area (13) and the inlet of the measuring vessel (3).

10. A liquid metering dispenser according to claim 9, characterised in that the guide means consists of a guide blade ring (29, 30) having a larger diameter than the end of the bottleneck of or a pourer permanently secured thereto, such ring more particularly forming an abutment for said end.

11. A liquid metering dispenser according to claim 9, characterised in that the guide means consists of a multi-blade axial-flow miniturbine mounted rotatably in the flow path.

**Revendications**

1. Doseur de liquides pour servir des boissons, qui peut être fixé par un manchon emboîtant (13) sur le goulot (11) d'une bouteille que l'on manie avec le doseur pour servir la boisson, et présente un godet doseur (3), lequel peut être mis en communication alternativement avec une entrée qui se raccorde au manchon emboîtant (13) et avec une sortie située à l'autre extrémité, à l'aide d'organes de fermeture (6, 9, 10) qui peuvent être actionnés ensemble à l'aide d'une manette (17) munie d'un manchon de guidage (15), qui sont retenus dans une position de fermeture par un ressort, et qui sont disposés sur un poussoir commun (7, 8) qui émerge de l'extrémité côté écoulement du godet doseur (3), et qui forme lui-même un tube de sortie (8), un dispositif d'entrée d'air (4, 5) étant prévu pour le godet doseur, caractérisé en ce que les organes de fermeture (6, 9, 10) sont guidés en supplément à l'aide du manchon de guidage (15) le long d'un guide (20) prévu dans le prolongement du godet doseur (3), et reliés à une manette extérieure présentant la forme d'une gâchette (22), le manchon emboîtant (13) étant relié à l'entrée supérieure du godet doseur (3) par un coude de tube (12) en formant un angle obtus, de sorte que la gâchette (22) peut être actionné à l'aide de l'index de la main qui tient le doseur par une partie en forme de crosse de pistolet qui est formée par le manchon emboîtant (13) et le coude de tube (12).

2. Doseur de liquides selon la revendication 1, caractérisé en ce que le guidage (20; 35) prévu dans le prolongement du godet doseur (3) présente au moins une glissière longitudinale (21; 37) prévue pour un curseur (23) solidaire de la gâchette.

3. Doseur de liquides selon la revendication 1 ou 2, caractérisé en ce que le guide qui prolonge le godet doseur (3) forme lui-même un manchon (20) dans lequel le manchon de guidage (15) solidaire du poussoir (7, 8) est guidé, tandis que la gâchette (17) prévue à l'extrémité côté écoulement du manchon de guidage (15) et solidaire d'un plateau (14) présentant un passage traversant pour le poussoir (8) empiète extérieurement par une partie longitudinale (13) sur le guide (20; 35) qui prolonge le godet doseur.

4. Doseur de liquides selon la revendication 3, caractérisé en ce que, le plateau (14) est creusé en forme de cuvette dans le sens allant vers le passage traversant (24) prévu pour le poussoir (8) qui forme la sortie et est muni de trous traversants (26) latéralement à la sortie (16).

5. Doseur de liquides selon une des revendications 1 à 4, caractérisé en ce que le guide (20; 35) qui prolonge le godet doseur (3) est monté de façon à pouvoir tourner autour de l'axe longitudinal du godet doseur (3) avec le poussoir (7, 8) et la gâchette (17) et à pouvoir être immobilisé dans différentes positions angulaires.

6. Doseur de liquides selon une des revendications 1 à 5, caractérisé en ce qu'un compteur qui indique chaque manœuvre du doseur est agencé en saillie radiale par son boîtier (38) sur le guide (35) solidaire du godet doseur (3) et est agencé à un certain écartement angulaire de la région de circulation de la gâchette (17).

7. Doseur de liquides selon la revendicaiton 6, caractérisé en ce que le manchon de guidage (15) présente dans sa paroi latérale des encoches de butée (42, 43), l'une à la suite de l'autre dans la direction longitudinale, destinées à agir sur un bras de manœuvre du compteur (38) qui est constitué par une branche (41) d'un ressort de torsion et il est prévu un compteur dans lequel la course nécessaire pour la manœuvre correspond seulement à une fraction de la course de manœuvre totale du doseur, de sorte que, lorsqu'on effectue une course complète du doseur, il ne se produit qu'un comptage, le bras de manœuvre (41) sautant alors de l'encoche de butée (42) à l'encoche de butée (43) tandis que, dans une course de manœuvre, ce n'est qu'après le mouvement de retour partiel du poussoir (7, 8) du doseur qu'il peut s'effectuer une manœuvre du compteur sous l'action du bras de manœuvre qui entre alors en prise avec l'une des encoches (43).

8. Doseur de liquides selon une des revendications 1 à 7, caractérisé en ce que le manchon emboîtant (13) peut être fixé par une liaison permanente au goulot (11) de la bouteille, à l'aide d'une fixation (31 à 34) qui peut être plombée ou scellée.

9. Doseur de liquides selon une des revendications 1 à 8, caractérisé en ce que, sur le trajet d'écoulement compris entre la région de réception (13) qui reçoit l'extrémité du goulot de la bouteille et l'entrée du godet doseur (3) sont prévus des dispositifs directeurs (29, 30) qui subdivisent le courant d'air et le courant de liquide en plusieurs courants partiels dans leur région.

10. Doseur de liquides selon la revendication 9, caractérisé en ce que le dispositif directeur est composé d'une bague porte-aubes directrices (29, 30) présentant un diamètre supérieur à celui de l'extrémité du goulot de la bouteille ou d'un bec verseur fixé de façon permanente à ce goulot, cette bague formant en particulier une butée pour cette extrémité.

11. Doseur de liquides selon la revendication 9, caractérisé en ce que le dispositif directeur est composé d'une petite turbine à plusieurs aubes, parcourue axialement par le courant, qui est montée rotative sur le trajet de l'écoulement.

# FIG.1

# FIG.2

# FIG.3

## FIG.4

## FIG.5

# FIG.6

EP 0 252 062 B1

**FIG.7**

**FIG.8**

**FIG.9**

**FIG.10**